Europäisches Patentamt

European Patent Office

Office européen des brevets

(19)

(11) Publication number: **0 170 638 B1**

## EUROPEAN PATENT SPECIFICATION

(12)

(45) Date of publication of patent specification: **29.04.92**

(51) Int. Cl.⁵: **H04L 7/00**, H04N 7/13, H04L 25/38

(21) Application number: **85830194.8**

(22) Date of filing: **26.07.85**

(54) **Method of and apparatus for transmitting a clock signal via cable over long distances.**

(30) Priority: **02.08.84 IT 4868484**

(43) Date of publication of application:
**05.02.86 Bulletin 86/06**

(45) Publication of the grant of the patent:
**29.04.92 Bulletin 92/18**

(84) Designated Contracting States:
**AT BE CH DE FR GB LI LU NL SE**

(56) References cited:
**EP-A- 0 005 943**
**EP-A- 0 101 218**
**DE-A- 1 499 820**

**PATENT ABSTRACTS OF JAPAN, vol. 5, no. 91 (E-61)[763], 13th June 1981; & JP-A-56 35 553 (HITACHI SEISAKUSHO K.K.) 08-04-1981**

(73) Proprietor: **FONDAZIONE UGO BORDONI**
**Viale Trastevere 108**
**I-00153 Roma(IT)**

(72) Inventor: **Miceli, Salvatore**
**Via Foscolo 32**
**Roma(IT)**

(74) Representative: **Fiammenghi-Domenighetti, Delfina et al**
**Fiammenghi-Fiammenghi Via Ouattro Fontane 31**
**I-00184 Roma(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(–/2.17/2.0)

## Description

The present invention relates to a method of and an apparatus for transmitting a clock signal via cable over long distances and is applicable for example to the transmission of digital video parallel interface signals which are timed by a synchronous clock.

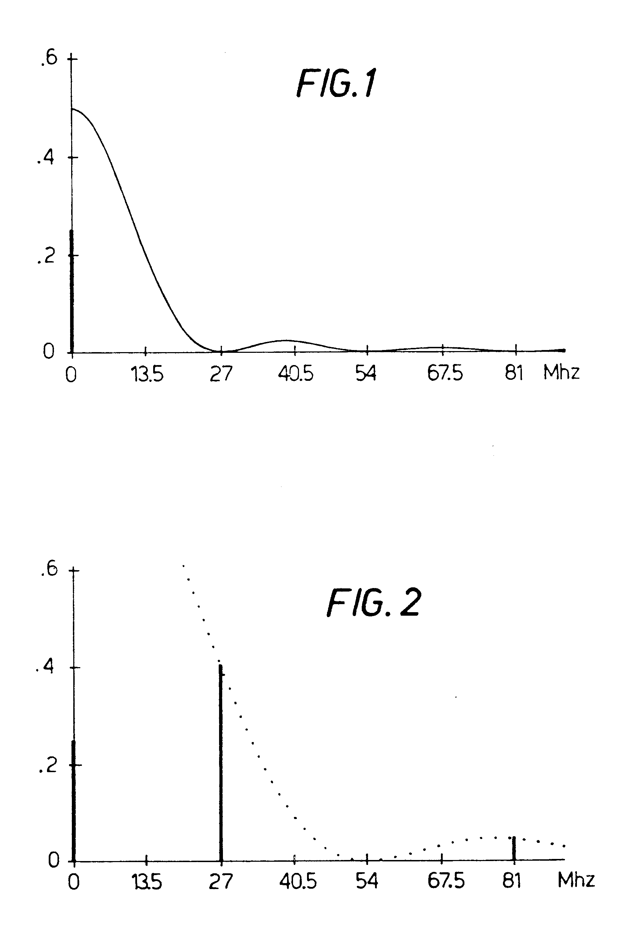

The parallel data transmission is usually carried out over a certain number of lines carrying binary digits. On a further line a clock signal is usually carried to time the instant(s) in which data have become stable assuming a steady logic level, i.e. the instant(s) in which data are not undergoing a logic transition so that a user can read the transmitted information. When these signals are carried over cables of some length, it is found that the clock signal is impaired much faster than the information containing signals. In fact, the maximum length of any given kind of cable over which the interface signal can travel is determined by the impairment suffered by the clock signal. This is so because the data signal is a signal of the statistic or stochastic kind, i.e. it is aleatory because of the random variations of data, while the clock signal is a deterministic signal, i.e. varying periodically with the time according to a law previously known (square wave or the like, a.s.o.). In the case of the data signal of the stochastic kind the signal spectrum is continuous and has a first zero crossing (see Fig. 1) at the fundamental frequency, i.e. at the transmitted number of bits per second. In the case of the clock signal of deterministic kind the spectrum is a line spectrum having the first line at the fundamental frequency as above (see Fig. 2), in this case 27 MHz.

Consequently the two kinds of signals have completely different characteristics and exhibit a different behaviour when passing through the cables. In particular the clock signal having a higher frequency and a wider spectrum will be impaired long before than data, i.e. after a shorter length of cable it will be attenuated and altered because it will lose the square waveform and will undergo a level attenuation. The data signal being on an average at lower frequency will be impaired after a longer length of cable or under the same length of cable will undergo lower deteriorations. As above mentioned the spectrum of the above signals is shown in the Figs. 1 and 2. In particular the Fig. 1 shows the typical continuous spectrum of the stochastic information signals, while the Fig. 2 shows the line spectrum of the clock signal at 27 MHz. Both figures have the same frequency scale.

At the present status of the art transmission in parallel via cables is carried out up to middle-short distances, the distance being obviously function both of the operating frequency and the quality of the cable. For example, in case of a digital video signal the bits of which are traveling at 27 Mbits/second on a suitable cable, the maximum distance that can be reached varies from 50 to 100 m. The techniques used up to now to increase this distance are directed prevalently to improve the quality of the cable or to the equalization thereof. The achieved results, however, cannot be deemed satisfactory with respect to the ratio efficiency/cost of the cable.

From JP-A-5635553 it is known to produce a clock signal at the receiving side by using the timing signal available at the transmitting side and transmitted via a line together with the data. This signal is reversed at every data transfer as the synchronous signal for transferring the data and the level inversion is utilized to produce the clock signal.

From EP-A-0005943 it is known to transmit data along a transmission path at a rate C greater than the upper data rate limit A of the path. A data transmitter driven by an internal clock at C Hertz transmits data along the transmission path and, at the same time, also transmits a clock signal at a frequency C/N Hertz, where C/N is smaller than A along the path. At the receiver the data is clocked into a series of data stores under the control of the transmitted clock signal and is thereafter recombined into a serial stream under the control of clock signal driving the receiver.

Both these known systems are directed to solve the problem related with the deterioration of a transmitted clock signal through the provision of a timing signal which is independent of the data signals and, as a deterministic signal, has a spectrum characteristic different from that of the data signals.

The present invention seeks to provide a method of and an apparatus for transmitting the clock information by means of a signal having a spectrum characteristic similar to that of the data waveform, i.e. the information containing signals. In this case the clock signal will be not impaired before the data signal like in the past, but it will exhibit the same behaviour and will undergo the same changes of the data signals with which it travels in parallel. To solve this problem the present invention provides to send on the pair of conductors of the clock signal a socalled alternating parity signal (AP) which is obtained by alternately sending the odd and even parity of at least one of the information containing signals carried on the other pairs of conductors. This signal can be obtained as the modulus 2 sum, carried out by an exclusive OR, of the parity signal (P) and of an alternate signal (C) at a frequency which is half of that of the clock signal, the transmission of which has to be optimized according to the present invention as illustrated into details hereafter. The formula is:

$$AP = P \oplus C \qquad (1)$$

At the receiving end the bits of the transmission data are found which can be used to compute the parity signal (P) and the alternating parity signal (AP) again, the latter being received on the line of the clock signal. The signal (C) can be obtained again by applying to (1) a well known property of the exclusive OR, and namely:

$$C = P \oplus AP \qquad (2)$$

In such a way a signal having half frequency with respect to that of the clock signal is provided again. From this signal it is very easy to obtain by means of a digital doubler the original clock signal having double frequency and timing again the data signals after suitable phasing.

The reason of halving the frequency of the clock signal for example from a signal of 27 MHz to a signal of 13,5 MHz to be added by modulus 2 to the stochastic signals containing the information, is that in order to take advantage of the properties of the modulus 2 sum it is necessary to sum data which are homogeneous to each other, i.e. data signals remaining at a determined logic level for the whole period of the clock signal. The signal obtained by halving the frequency of the clock signal remains of course at a steady logic level for the whole period of the double frequency signal which has generated it. Consequently, when suitably phased, it represents a signal which homogeneous to the data signal and can be added thereto so as to obtain a sum signal having the desired spectrum characteristic, i.e. that of a stochastic signal or data signal.

In the light of what above the present invention according to a first aspect thereof provides a method of transmitting a clock signal via cable over long distances comprising the steps of: a) halving the frequency of the clock signal to be transmitted; b) deriving at least one of the digital data signals from the parallel transmission lines and feeding such a signal together with the half frequency signal to first modulus 2 sum means; c) transmitting on a multiple cable said at least one of the data signals and the output signal of said first modulus 2 sum means, i.e. the socalled alternating parity signal, and feeding said signal to second modulus 2 sum means; d) doubling the frequency of the output signal of said modulus 2 sum means so as to obtain the original clock signal.

In order to obviate the unavoidable phase differences the signals are exposed to when passing through the circuit devices according to the present invention it is necessary to carry out a suitable phasing for the compensation of such delays. It is therefore suitable that before being fed to the modulus 2 adder the digital data signals pass through a group of phasing circuits, for example flip-flops, phasing the data signals with the signal having half a frequency of the clock signal.

Likewise, the same procedure will be followed after the execution of the modulus 2 sum, i.e. both at the transmitting end before conveying via cable the data signals together with the alternating parity signal and at the receiving end when doubling the frequency of the received signal having half a frequency of the clock signal with which the data signals have to be phased again.

The present invention according to its second aspect provides an apparatus for transmitting a clock signal via cable over long distances, comprising: means for halving the frequency of the clock signal, said means being fed with such a signal; first modulus 2 sum means receiving at its input the output of the means for halving the frequency and at least one of the digital data signals containing the information, and generating at its output the alternating parity signal; a multipair data transmission cable with drive circuits and receiving circuits associated thereto; second modulus 2 sum means receiving at its input through the transmission cable the alternating parity signal generated by the first modulus 2 sum means and the above mentioned at least one of the digital data signals containing the information; and frequency doubling means connected to the output of the second modulus 2 sum means and generating the original clock signal.

It is self evident that, since the alternating parity signal (AP) is derived from the information bit signals by means of a linear combination of stochastic signals and a deterministic signal, it will be impaired as above mentioned neither more nor less than the other information data signals travelling on the same cable, this entailing the same loss and corruption on both signals under the same length of the transmission cable.

The alternating parity signal, therefore, can travel on a given cable without being impaired as far as distances much longer that those reached by a 27 MHz clock signal that, since it has a much wider spectrum, travels with greater difficulty and suffers a great attenuation and much higher jitter and synchronization instability. Thus the present invention affords the use of longer non-equalized lengths of a given kind of cable or the use of cheaper cables for a given non-equalized connection length. Furthermore, since the alternating parity signal instead of a line spectrum exhibits a continuous spectrum like that of the information data signals, there is no risk of harmful interference to radio services due to radiations of the clock signal frequencies or multiples of them from the interface equipment or from the cables.

Finally, since the alternating parity signal is derived from the parity signal, it is easy to use it in order to detect errors in the received bit streams. The quality of the conductor pairs of a connection can thus be monitored by measuring the bit error rate based on the number of received parity violations.

A preferred embodiment of the present invention having then non-limitative and non-resctrictive character will be illustrated herebelow in the following description with reference to the annexed drawings, wherein:

Fig. 1 is a diagram of the stochastic information data signal spectrum, in which the frequency is plotted in the abscissa and the power density in the ordinate;

Fig. 2 is a diagram of the deterministic 27 MHz clock signal line spectrum, in which the frequency is plotted in the abscissa and the power in the ordinate;

Fig. 3 is a schematic circuit for generating an alternating parity signal according to the present invention;

Fig. 4 is a schematic circuit for reconstructing the clock signal according to the present invention;

Fig. 5 shows the waveforms in the circuit of Fig. 3; and

Fig. 6 shows the waveforms in the circuit of Fig. 4.

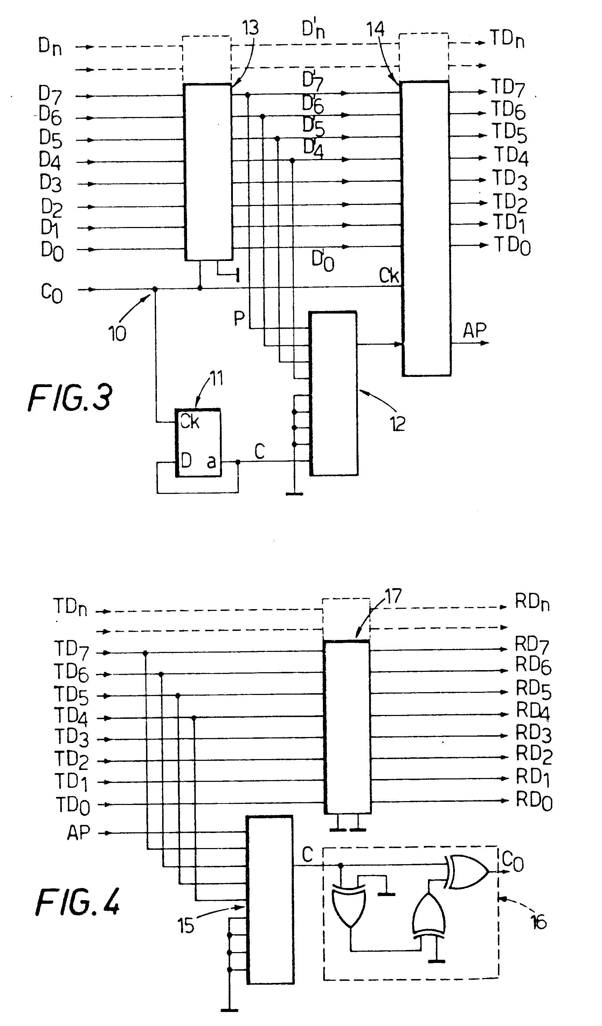

As already mentioned above Fig. 1 shows the typical continuous spectrum of the stochastic information signals and Fig. 2 shows the line spectrum of the deterministic 27 MHz clock signal with the same frequency scale. As one can see the two signals have different spectrum kinds and also different spectrum widths. Therefore they suffer different restrictions when traveling on a given cable and undergo impairments of different amount. By the circuits of Figg. 3 and 4 it is possible to obviate such an inconvenience. In Fig. 3 it is illustrated a preferred embodiment of a circuit solving the problem of the present invention and generating a socalled alternating parity signal (AP) having a waveform that alternately exhibits the odd and the even parity of the information data signals. The circuit of Fig. 3 generally designated by 10 comprises a flip-flop 11 for halving the frequency of the clock signal $C_O$ so as to obtain a signal C which is fed to an input of a modulus 2 adder formed by an exclusive OR-gate and generally designated by 12. The digital signals coming from the information data source at TTL logic levels travel in parallel on n lines designated by $D_O$ to $D_n$ and are fed to a group of flip-flops being equal in number to the input lines and being assembled in a single block 13 of the socalled type FIFO (First In First Out). The function of the block 13 is that of causing a line delay of the data signals $D_O$ to $D_n$ to phase them in a suitable manner with the signal C having half a frequency of the clock signal $C_O$ before their feeding to the modulus 2 adder designated by 12.

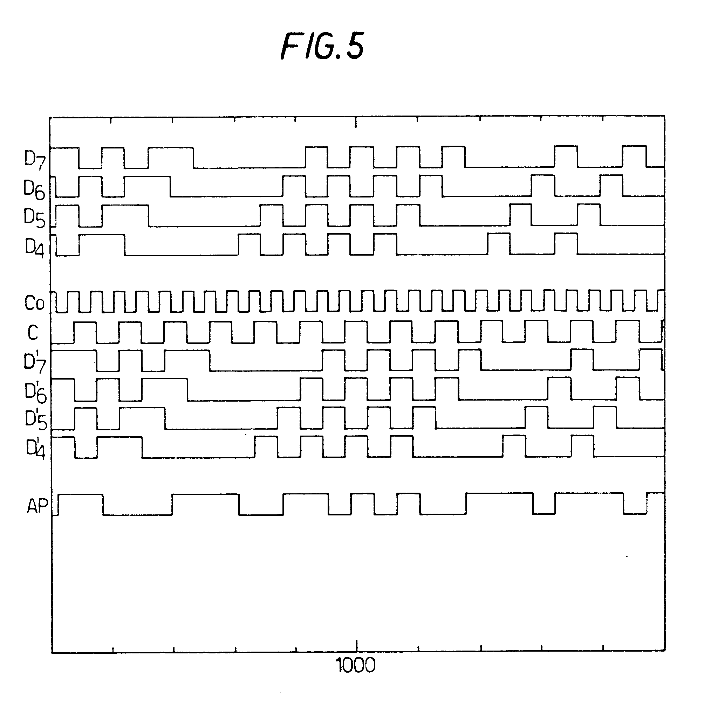

Besides the signal C the modulus 2 adder 12 receives at its input at least one of the phased data signal $D'_O$ to $D'_n$. In the embodiment of Fig. 3 the selected number of the data signals is four but could be any number selected from 1 to n. At the output of the modulus 2 adder 12 the alternating parity signal (AP) is obtained which has to be phased again with the data signal. This is carried out by means of another group of flip-flop similar to the previous one and designated by 14. At the output of the block 14 the information data signal $TD_O$ to $TD_n$ are then available to be transmitted via cable together with the alternating parity signal AP having the same continuous spectrum of the data signals. The waveforms of the signals of Fig. 3 are shown in Fig. 5. The signals $TD_O$ to $TD_n$ and AP thus obtained are transmitted via cable through drive circuits coupling the electric levels of the data signals to the electrical characteristics of the transmission cable, and are received at the other end of the cable from receiving circuits having the same function but reversed as the drive circuits. Both circuits are not shown neither described into detail because they are of well known type.

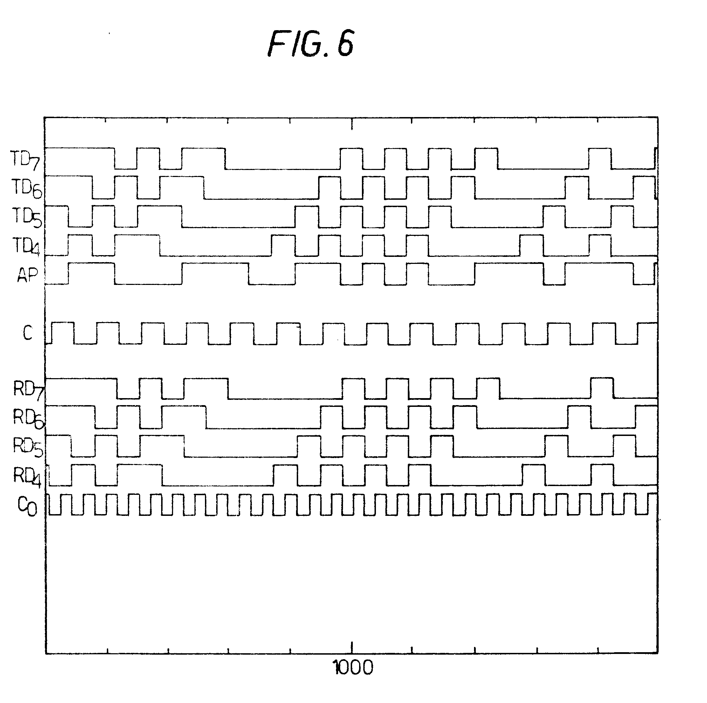

At the receiving end (Fig. 4) the data signals, in a number of four ($TD_4$ to $TD_7$) according to the shown preferred embodiment are fed together with the alternating parity signal AP to a second modulus 2 adder designated by 15. By the known property of the exclusive OR which is outlined in the introduction of the present invention, the signal C having half a frequency of the original clock signal $C_O$ will be obtained again at the output of the modulus 2 adder 15. Now, by feeding the signal C to a frequency doubler of the conventional type generally designated by 16 the original clock signal $C_O$ will be obtained again. Of course, in order that the data signals are phased again with the clock signal $C_O$ thus obtained, the transmission data signals $TD_O$ to TD are fed to a group of flip-flops 17 which supply at their output the information containing digital signals $RD_O$ to $RD_n$ received after their traveling on the cable and timed by the clock signal $C_O$, said digital signals being then available to be fed at TTL logic levels to the user. The waveforms of the signals in the circuit of Fig. 4 are shown in Fig. 6.

## Claims

1. Method of transmitting a clock signal via cable over long distances, comprising the step of:

   a) halving the frequency of the clock signal $(C_o)$ to be transmitted, characterized in that it further comprises the steps of:

   b) deriving at least one $(D'_4 - D'_7)$ of the digital data signals $(D_o - D_n)$ containing the information, generated by a data source and traveling on parallel transmission lines, and feeding such signals together with the signal (C) having half a frequency of the clock signal $(C_o)$ to first modulus 2 sum means (12);

   c) transmitting via multipair cable said at least one $(TD_4 - TD_7)$ of the data signals $(TD_o - TD_n)$ and the output signal of said first modulus 2 sum means (12), i.e. the alternating parity signal (AP), and feeding such signals to second modulus 2 sum means (15); and

   d) doubling the frequency of the output signal (C) of said second modulus 2 sum means (15) in order to obtain the original clock signal $(C_o)$.

2. Method according to claim 1, characterized in that before the step b), in particular before deriving said at least one $(D'_4 - D'_7)$ of the digital data signals $(D_o - D_n)$, such data signals are phased with the signal (C) having half a frequency of the clock signal $(C_o)$ in order to compensate the unavoidable phase shift of the latter after halving its frequency.

3. Method according to claim 1, characterized in that before the step c), i.e. before transmitting via multipair cable said at least one $(TD_4 - TD_7)$ of the digital data signals $(TD_o - TD_n)$ and the alternating parity signal (AP), said signals are phased with each other.

4. Method according to claim 1, characterized in that said at least one $(TD_4 - TD_7)$ of the digital data signals $(TD_o - TD_n)$ received at the other end of the cable after the step c) is phased with the output signal $(C_o)$ obtained after the step d) of doubling the frequency of the output signal (C) of the second modulus 2 sum means (15).

5. Apparatus for transmitting a clock signal via cable over long distances, comprising:

   - means (11) for halving the frequency of the clock signal (Co) to be transmitted, characterized in that it further comprises:

   - first modulus 2 sum means (12) receiving at its input the output (C) of the means (11) for halving the frequency of the clock signal $(C_o)$ and at least one $(D'_4 - D'_7)$ of the digital data signals $(D_o - D_n)$ containing the information and generated by a data source, and producing at its output the alternating parity signal (AP);

   - a multipair cable for data transmission with drive circuits and receiving circuits associated thereto;

   - second modulus 2 sum means (15) receiving at its input through the transmission cable the alternating parity signal (AP) generated by the first modulus 2 sum means (12) and said at least one $(TD_4 - TD_7)$ of the digital data signals $(TD_o - TD_n)$ containing the information; and

   - frequency doubling means (16) connected to the output (C) of the second modulus 2 sum means (15) and generating the original clock signal $(C_o)$.

6. Apparatus according to claim 5, characterized in that between the data source generating the digital data signals $(D_o - D_n)$ containing the information and the first modulus 2 sum means (12) a first means (13) is provided for phasing the digital data signals $(D'_o - D'_n)$ with the signal (C) having half a frequency of the clock signal $(C_o)$.

7. Apparatus according to claims 5, 6 characterized in that between the first means (13) for phasing the digital data signals $(D'_o - D'_n)$ with the clock signal (C) and the multipair data transmission cable and between the first modulus 2 sum means (13) and said cable a second means (14) is provided for phasing the digital data signals $(D'_o - D'_n)$ with the alternating parity signal (AP).

8. Apparatus according to claim 5, characterized in that between the receiving circuits at the end of the multipair cable and the user a third means (17) is provided for phasing the digital data signals $(TD_o - TD_n)$ with the output signal of said doubling means (16).

## Revendications

1. Procédé de transmission d'un signal d'horloge, sur un câble, à longues distances, comprenant les opérations suivantes :

a) division par deux de la fréquence du signal horloge ($C_0$) à transmettre, caractérisé en ce qu'il comprend en outre les opérations suivantes:

b) dérivation d'au moins un ($D'_4 - D'_7$) des signaux de données numériques ($D_0 - D_n$) contenant l'information, générés par une source de données et se déplaçant sur des lignes de transmission parallèles, et application de ces signaux en même temps que le signal (C) ayant une fréquence moitié de celle du signal d'horloge ($C_0$) au premier moyen d'addition (12) de module 2 ;

c) transmission sur un câble à paires multiples dudit signal au moins ($TD_4 - TD_7$) des signaux de données ($TD_0 - TD_n$) et du signal de sortie dudit premier moyen d'addition (12) de module 2, c'est-à-dire le signal de l'autre parité (AP), et application de ces signaux à un second moyen d'addition (15) de module 2 ; et

d) doublement de la fréquence du signal de sortie (C) dudit second moyen d'addition (15) de module 2 afin d'obtenir le signal d'horloge original ($C_0$).

2. Procédé selon la revendication 1, caractérisé en ce qu'avant l'opération b), en particulier avant de dériver ledit signal ($D'_4 - D'_7$) parmi les signaux de données numériques ($D_0 - D_n$), ces signaux de données sont mis en phase avec le signal (C) ayant une fréquence moitié de celle du signal horloge ($C_0$) afin de compenser l'inévitable déphasage de ce dernier après la division de sa fréquence par deux.

3. Procédé selon la revendication 1, caractérisé en ce qu'avant l'opération c), c'est-à-dire avant la transmission sur le câble à paires multiples dudit signal au moins ($TD_4 - TD_7$) parmi les signaux de données numériques ($TD_0 - TD_n$) et du signal de l'autre parité (AP), lesdits signaux sont mis en phase.

4. Procédé selon la revendication 1, caractérisé en ce que le signal au moins ($TD_4 - TD_7$) des signaux de données numériques ($TD_0 - TD_n$) reçus à l'autre extrémité du câble après l'opération c) est mis en phase avec le signal de sortie ($C_0$) obtenu après l'opération d) de doublement de la fréquence du signal de sortie (C) du second moyen d'addition (15) de module 2.

5. Appareil pour transmettre un signal horloge sur un câble, à longue distance, comprenant :

- un moyen (11) pour diviser par deux la fréquence du signal horloge ($C_0$) à transmettre, caractérisé on ce qu'il comprend en outre :

- un premier moyen d'addition (12) de module 2 recevant sur son entrée la sortie (C) du moyen (11) pour diviser par deux la fréquence du signal horloge ($C_0$) et au moins l'un ($D'_4 - D'_7$) des signaux de données numériques ($D_0 - D_n$) contenant l'information et générés par une source de données, et formant à sa sortie le signal de l'autre parité (AP) ;

- un câble à paires multiples pour transmettre des données auquel sont associés des circuits de commande et des circuits de réception ;

- un second moyen d'addition (15) de module 2 recevant à son entrée par le câble de transmission le signal de l'autre parité (AP) généré par le premier moyen d'addition (12) de module 2 et ledit signal au moins ($TD_4 - TD_7$) des signaux de données numériques ($TD_0 - TD_n$) contenant l'information ; et

- un moyen de doublement de la fréquence (16) connecté à la sortie (C) du second moyen d'addition (15) de module 2 et générant le signal horloge d'origine ($C_0$).

6. Appareil selon la revendication 5, caractérisé en ce que entra la source de données générant les signaux de données numériques ($D_0 - D_n$) contenant l'information et le premier moyen d'addition (12) de module 2 , est installé un premier moyen (13) pour mettre en phase les signaux de données numériques ($D'_0 - D'_n$) avec le signal (C) ayant une fréquence moitié de celle du signal horloge ($C_0$).

7. Appareil selon les revendications 5, 6, caractérisé en ce qu'entre le premier moyen (13) de mise en phase des signaux de données numériques ($D'_0 - D'_n$) avec le signal horloge (C) et le câble de transmission des données à paires multiples, et entre le premier moyen d'addition (13) de module 2 et ledit câble est installé un second moyen (14) pour mettre en phase les signaux de données numériques ($D'_0 - D'_n$) avec le signal de l'autre parité (AP).

8. Appareil selon la revendication 5, caractérisé en ce qu'entre les circuits de réception à l'extrémité du câble à paires multiples et l'utilisateur est installé un troisième moyen (17) pour mettre en phase les signaux de données numériques ($TD_0$ - $TD_n$) avec le signal de sortie dudit moyen de doublement (16).

**Patentansprüche**

1. Verfahren zum Übertragen eines Taktsignals über Kabel über große Distanzen, mit dem Schritt:

   a) Halbieren der Frequenz des zu übertragenden Taktsignals ($C_o$),**gekennzeichnet durch** die weiteren Schritte:

   b) Ableiten zumindest eines ($D'_4$ - $D'_7$) der die Information enthaltenden digitalen Datensignale ($D_o$ -$D_n$), die durch eine Datenquelle erzeugt sind und auf parallelen Übertragungsleitungen laufen, und Zuführen solcher Signale zusammen mit dem die halbe Frequenz des Taktsignals ($C_o$) besitzenden Signal (C) zu einer ersten Modulo-2-Summiereinrichtung (12),

   c) Übertragen des zumindest einen ($TD_4$ - $TD_7$) der Datensignale ($TD_o$ -$TD_n$) und des Ausgangssignals der ersten Modulo-2-Summiereinrichtung (12), d. h., des alternierenden Paritätssignals (AP), über ein hochpaariges Kabel, und Zuführen solcher Signale zu einer zweiten Modulo-2-Summiereinrichtung(15), und

   d) Verdoppeln der Frequenz des Ausgangssignals (C) der zweiten Modulo-2-Summiereinrichtung (15), um das ursprüngliche Taktsignal ($C_o$) zu erhalten.

2. Verfahren nach Anspruch 1, dadurch gekennzeichnet, daß vor dem Schritt b), insbesondere vor dem Ableiten des zumindest einen ($D'_4$ - $D'_7$) der digitalen Datensignale ($D_o$ - $D_n$), diese Datensignale mit dem die halbe Frequenz des Taktsignals ($C_o$) besitzenden Signal (C) in Phase gebracht werden, um die unvermeidliche Phasenverschiebung des letzteren nach Halbierung seiner Frequenz zu kompensieren.

3. Verfahren nach Anspruch 1, dadurch gekennzeichnet, daß vor dem Schritt c), d. h. vor der Übertragung des zumindest einen ($TD_4$ - $TD_7$) der digitalen Datensignale ($TD_o$ - $TD_n$) und des alternierenden Paritätssignals (AP) über das hochpaarige Kabel, die Signale miteinander in Phase gebracht werden.

4. Verfahren nach Anspruch 1, dadurch gekennzeichnet, daß zumindest eines ($TD_4$ - $TD_7$) der am anderen Kabelende nach dem Schritt c) empfangenen digitalen Datensignale ($TD_o$ - $TD_n$) mit dem Ausgangssignal ($C_o$), das nach dem Schritt d) der Frequenzverdoppelung des Ausgangssignals (C) der zweiten Modulo-2-Summiereinrichtung (15) erhalten wird, in Phase gebracht wird.

5. Vorrichtung zum Übertragen eines Taktsignals über Kabel über große Distanzen, mit
   - einer Einrichtung (11) zum Halbieren der Frequenz des zu übertragenden Taktsignals ($C_o$),
   **gekennzeichnet durch**:
   - eine erste Modulo-2-Summiereinrichtung (12), die an ihrem Eingang den Ausgang (C) der Einrichtung (11) zum Halbieren der Frequenz des Taktsignals ($C_o$) und zumindest eines ($D'_4$ - $D'_7$) der die Information enthaltenden und durch eine Datenquelle erzeugten digitalen Datensignale ($D_o$ - $D_n$) empfängt und an ihrem Ausgang das alternierende Paritätssignal (AP) erzeugt,
   - ein hochpaariges Kabel für die Datenübertragung mit damit verknüpften Treiberschaltungen und Empfangsschaltungen,
   - eine zweite Modulo-2-Summiereinrichtung (15), die an ihrem Eingang über das Übertragungskabel das durch die erste Modulo-2-Summiereinrichtung (12) erzeugte alternierende Paritätssignal (AP) und das zumindest eine ($TD_4$ - $TD_7$) der die Information enthaltenden digitalen Datensignale ($TD_o$ - $TD_n$) empfängt, und
   - eine Frequenzverdoppelungseinrichtung (16), die mit dem Ausgang (C) der zweiten Modulo-2-Summiereinrichtung (15) verbunden ist und das ursprüngliche Taktsignal ($C_o$) erzeugt.

6. Vorrichtung nach Anspruch 5, dadurch gekennzeichnet, daß zwischen der Datenquelle, die die die Information enthaltenden digitalen Datensignale ($D_o$- $D_n$) erzeugt, und derersten Modulo-2-Summiereinrichtung (12) eine erste Einrichtung (13) zum Synchronisieren der digitalen Datensignale ($D'_o$ - $D'_n$) mit dem die halbe Frequenz des Taktsignals ($C_o$) besitzenden Signal (C) vorhanden ist.

7. Vorrichtung nach den Ansprüchen 5, 6, dadurch gekennzeichnet, daß zwischen der ersten Einrichtung (13) zum Synchronisieren der digitalen Datensignale ($D'_o$ - $D'_n$) mit dem Taktsignal (C) und dem hochpaarigen Datenübertragungskabel sowie zwischen der ersten Modulo-2-Summiereinrichtung (13) und dem Kabel eine zweite Einrichtung (14) zum Synchronisieren der digitalen Datensignale ($D'_o$ - $D'_n$) mit dem alternierenden Paritätssignal (AP) vorhanden ist.

8. Vorrichtung nach Anspruch 5, dadurch gekennzeichnet, daß zwischen den Empfangsschaltungen am Ende des hochpaarigen Kabels dem Benutzer eine dritte Einrichtung (17) zum Synchronisieren der digitalen Datensignale ($TD_o$ - $TD_n$) mit dem Ausgangssignal der Verdoppelungseinrichtung (16) vorgesehen ist.

FIG.1

FIG. 2

FIG.3

FIG.4

# FIG.5

EP 0 170 638 B1

# FIG. 6

1000

12